Europäisches Patentamt

European Patent Office

Office européen des brevets

(19)

(11) EP 1 603 357 A1

(12) EUROPEAN PATENT APPLICATION

(43) Date of publication:
07.12.2005 Bulletin 2005/49

(51) Int Cl.⁷: $H04Q\ 7/36$

(21) Application number: 05252538.3

(22) Date of filing: 22.04.2005

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Jugl, Enrico**<br>  **90409 Muremberg (DE)**<br>• **Schacht, Mirko**<br>  **90584 Allersberg (DE)**<br>• **Derakhshan, Fariborz**<br>  **90491Nuremberg (DE)** |
| (30) Priority: **10.05.2004 US 842708** | |
| (71) Applicant: **LUCENT TECHNOLOGIES INC.**<br>**Murray Hill, New Jersey 07974-0636 (US)** | (74) Representative: **Sarup, David Alexander et al**<br>**Lucent Technologies NS UK Limted,**<br>**5 Mornington Road**<br>**Woodford Green, Essex IG8 OTU (GB)** |

(54) **Dynamic pilot power in a wireless communications system**

(57)    A method is provided for controlling pilot power in a communications system. The method comprises determining a load associated with a cell in the communications system, and setting pilot power at a level associated with the determined load. In one exemplary embodiment, pilot power is set at a first low level in response to the determined load being less than a preselected setpoint and at a second, higher level in response to the determined load being greater than the preselected setpoint.

FIGURE 3

## Description

## BACKGROUND OF THE INVENTION

### 1. FIELD OF THE INVENTION

This invention relates generally to a communications system, and, more particularly, to controlling the flow of data between a user and a communications base station.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile, may then access the system and, thus, other interconnected telecommunications systems, via one or more of the base stations. Typically, a mobile user maintains communications with the system as he/she passes through an area by communicating with one and then another base station, as he/she moves. Each area covered by a base station is commonly referred to as a cell.

The base stations are typically located in a grid pattern with overlapping areas of coverage to ensure that a mobile station is able to communicate with at least one of the base stations at all times. Each of the base stations is set to transmit at a preselected pilot power level sufficient to cover its cell, such that the combined effect is to cover the entire region. The pilot channels are broadcast in the downlink to allow cell identification and receipt level measurements.

Pilot power settings, however, are a complicated balancing act between coverage and interference. For example, if pilot power is set too low, then coverage at the fringes of a cell may be compromised as the load on the cell is increased by more mobile stations entering the cell. Thus, as the load in the cell increases, it is more likely that a mobile station near the fringe of the cell will be unable to establish or maintain communications with the base station.

Accordingly, it is a common design practice to increase the pilot power setting to a constant, higher value to insure good coverage when the load on the cell increases. This higher pilot power may be appropriate for a highly loaded cell, but is oversized when the cell is experiencing a low load. The oversized pilot power results in increased interference, causing reduced throughput. That is, the interference reduces the rate at which data/information may be transmitted between the mobile station and the base station. Reduced throughput results in inefficient usage of the cell resources and may produce unacceptably low data-transfer rates, which is particularly problematic for modem high-speed data network access.

The present invention is directed to overcoming, or at least reducing, the effects of one or more of the problems set forth above.

## SUMMARY OF THE INVENTION

In one aspect of the instant invention, a method is provided for controlling pilot power in a communications system. The method comprises determining a load associated with a cell in the communications system, and setting pilot power at a level associated with the determined load.

## BRIEF DESCRIPTION OF THE DRAWINGS

The invention may be understood by reference to the following description taken in conjunction with the accompanying drawings, in which like reference numerals identify like elements, and in which:

Figure 1 is a block diagram of a communications system, in accordance with one embodiment of the present invention;

Figure 2 depicts a block diagram of one embodiment of a base station and an access terminal used in the communications system of Figure 1;

Figure 3 is a flow diagram illustrating one embodiment of a method for controlling pilot power in the communications system of Figures 1 and 2; and

Figure 4 is a flow diagram illustrating an alternative embodiment of a method for controlling pilot power in the communications system of Figures 1 and 2.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

## DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

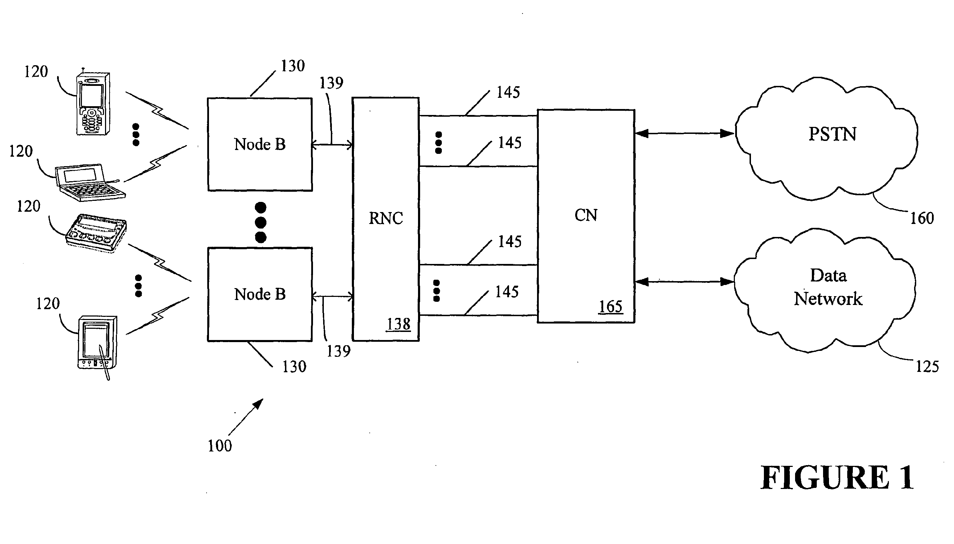

Turning now to the drawings, and specifically referring to Figure 1, a communications system 100 is illustrated, in accordance with one embodiment of the present invention. For illustrative purposes, the communications system 100 of Figure 1 is a Universal Mobile Telephone System (UMTS), although it should be understood that the present invention may be applicable to other systems that support data and/or voice communication, e.g., CDMA 2000/3G1X. The communications system 100 allows one or more mobile stations 120 to communicate with a data network 125, such as the Internet, through one or more base stations 130. The mobile station 120 may take the form of any of a variety of devices, including cellular phones, personal digital assistants (PDAs), laptop computers, digital pagers, wireless cards, and any other device capable of accessing the data network 125 through the base station 130.

In one embodiment, a plurality of the base stations 130 may be coupled to a Radio Network Controller (RNC) 138 by one or more connections 139, such as T1/EI lines or circuits, ATM circuits, cables, optical digital subscriber lines (DSLs), and the like. Although only one RNC 138 is illustrated, those skilled in the art will appreciate that a plurality of RNCs 138 may be utilized to interface with a large number of base stations 130. Generally, the RNC 138 operates to control and coordinate the base stations 130 to which it is connected. The RNC 138 of Figure 1 generally provides replication, communications, runtime, and system management services. The RNC 138, in the illustrated embodiment handles calling processing functions, such as setting and terminating a call path and is capable of determining a data transmission rate on the forward and/or reverse link for each mobile station 120 and for each sector supported by each of the base stations 130.

The RNC 138 is, in turn, coupled to a Core Network (CN) 165 via a connection 145, which may take on any of a variety of forms, such as T1/EI lines or circuits, ATM circuits, cables, optical digital subscriber lines (DSLs), and the like. Generally the CN 165 operates as an interface to a data network 125 and/or to a public telephone system (PSTN) 160. The CN 165 performs a variety of functions and operations, such as user authentication, however, a detailed description of the structure and operation of the CN 165 is not necessary to an understanding and appreciation of the instant invention. Accordingly, to avoid unnecessarily obfuscating the instant invention, further details of the CN 165 are not presented herein.

The data network 125 may be a packet-switched data network, such as a data network according to the Internet Protocol (IP). One version of IP is described in Request for Comments (RFC) 791, entitled "Internet Protocol," dated September 1981. Other versions of IP, such as IPv6, or other connectionless, packet-switched standards may also be utilized in further embodiments. A version of IPv6 is described in RFC 2460, entitled "Internet Protocol, Version 6 (IPv6) Specification," dated December 1998. The data network 125 may also include other types of packet-based data networks in further embodiments. Examples of such other packet-based data networks include Asynchronous Transfer Mode (ATM), Frame Relay networks, and the like.

As utilized herein, a "data network" may refer to one or more communication networks, channels, links, or paths, and systems or devices (such as routers) used to route data over such networks, channels, links, or paths.

Thus, those skilled in the art will appreciate that the communications system 100 facilitates communications between the mobile stations 120 and the data network 125. It should be understood, however, that the configuration of the communications system 100 of Figure 1 is exemplary in nature, and that fewer or additional components may be employed in other embodiments of the communications system 100 without departing from the spirit and skill of the instant invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

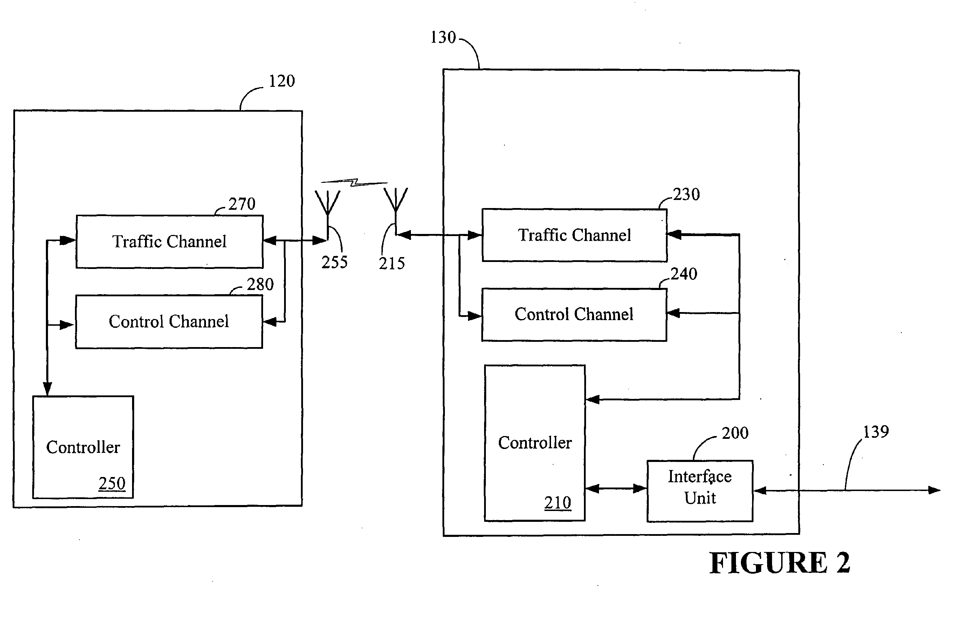

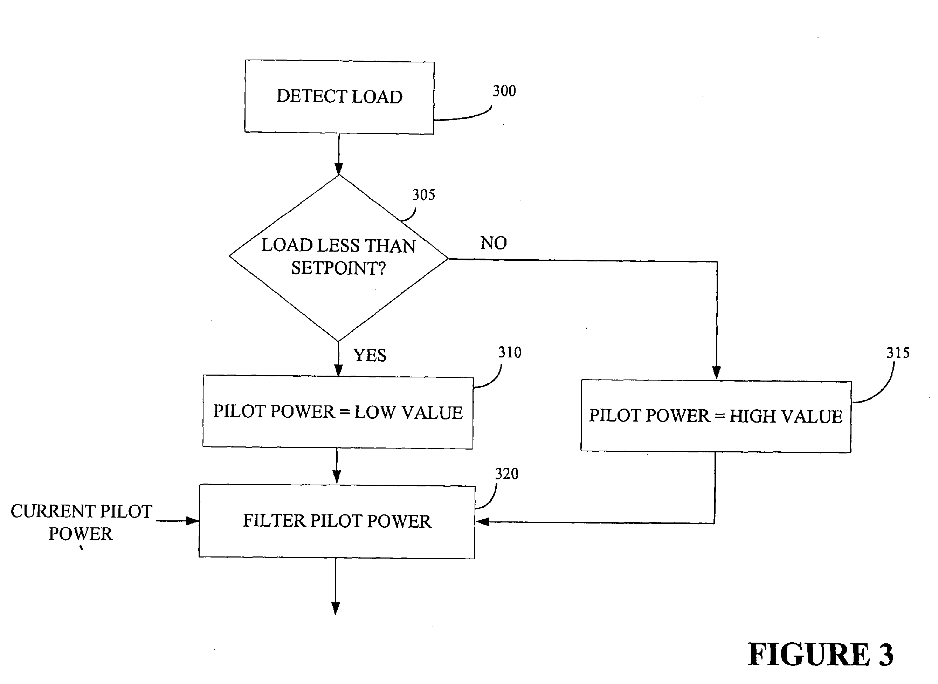

Referring now to Figure 2, a block diagram of one embodiment of a functional structure associated with an exemplary base station 130 and mobile station 120 is shown. The base station 130 includes an interface unit 200, a controller 210, an antenna 215 and a plurality of channels: a traffic channel 230, and a control channel 240. The interface unit 200, in the illustrated embodiment, controls the flow of information between the base station 130 and the RNC 138 (see Figure 1). The controller 210 generally operates to control both the transmission and reception of data and control signals over the antenna 215 and the plurality of channels 230, 240 and to communicate at least portions of the received information to the RNC 138 via the interface unit 200. The controller 210 and/or the RNC 138 may also be used to determine an appropriate setting for the pilot power, as discussed in more detail hereafter in conjunction with Figure 3.

The mobile station 120 shares certain functional attributes with the base station 130. For example, the mobile station 120 includes a controller 250, an antenna 255 and a plurality of channels: a traffic channel 270, and a control channel 280. The controller 250 generally operates to control both the transmission and reception of data and control signals over the antenna 255 and the plurality of channels 270, 280.

Normally, the channels 270, 280 in the mobile station 120 communicate with the corresponding channels 230, 240 in the base station 130. Under the operation of the controllers 210, 250 the channels 230, 270; 240, 280 are used to setup dedicated or shared transport channels for communications from the mobile station 120 to the base station 130. For example, the control channel 280 is generally used by the mobile station 120 to request permission to transmit data and/or control information to the base station 130. The control channel 280 may also be used to broadcast information to all mobile stations in the cell.

Turning now to Figure 3, a flow diagram illustrating the operation of the controller 210 (or a part of the RNC 138) with respect to determining and setting the pilot power is illustrated. In the embodiment illustrated in Figure 3, the process begins at block 300 with the load being determined. The load currently being experienced in a cell may be determined in a variety of ways without departing from the spirit and scope of the instant invention. For example, the load may be calculated as a function of the number of mobile stations currently connected to the cell. Alternatively, the load may be determined as a function of the aggregate transmission rate between the various mobile stations and the base station. That is, one heavy user may place similar demands to three relatively light users. Furthermore, the cell load may be determined by the ratio of the actual measured transmitted power of the cell to the total maximum transmit power.

In any event, the calculated load is then compared against a preselected set-point (at 305) to effect a 2-stage pilot power controller. That is, if the determined load is below the preselected set-point, then control transfers to block 310 where the pilot power is set to a predetermined low-value. On the other hand, if the determined load is above the preselected set-point, then control transfers to block 315 where the pilot power is set to a predetermined high-value. In this manner, when the cell is experiencing a relatively low load, then the pilot power may be set to a relatively low value to ensure appropriate coverage and low interference. Alternatively, when the cell is experiencing a relatively high load, the pilot power may be boosted to a relatively high value to maintain coverage.

Once the pilot power is set to its relatively low or high value, control transfers to block 320 where the pilot power is filtered (such as by a low pass filter) to prevent rapid changes. That is, the filtering allows the pilot power to change gradually from its current value to a target value (e.g., from the relatively low value to the relatively high value, or *vice versa)*. The rate at which the pilot power is allowed to change is a matter of design discretion, depending on a variety of implementation specific factors.

Those skilled in the art will appreciate that while the embodiment illustrated in Figure 3 shows a 2-stage pilot power controller, the number of stages may be varied without departing from the spirit and scope of the instant invention. For example, an alternative embodiment may use two set-points to establish a 3-stage pilot power controller. It is envisioned that any number of stages may be utilized without departing from the spirit and scope of the instant invention.

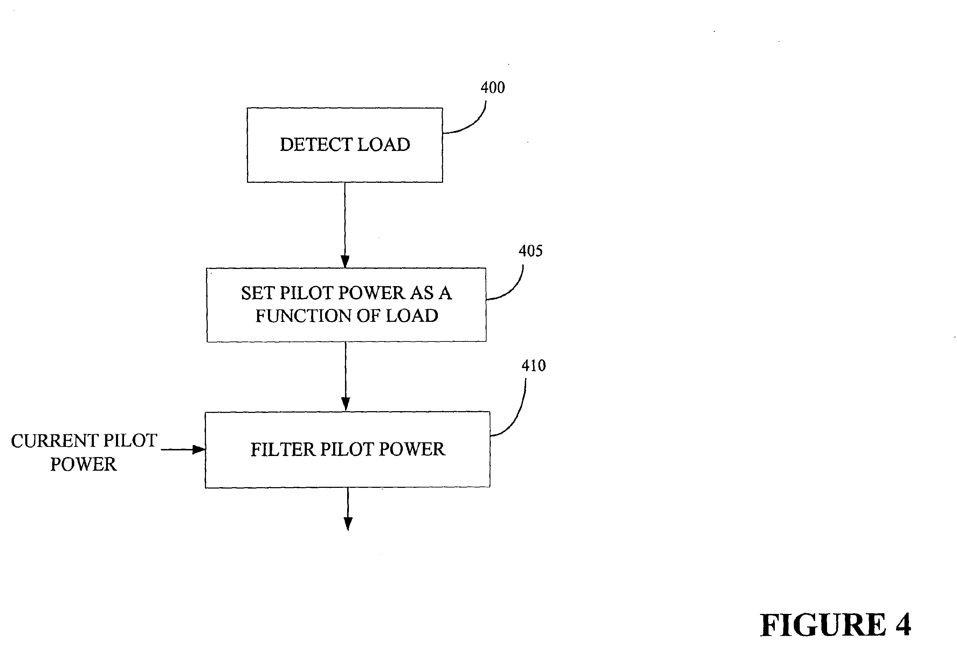

Turning now to Figure 4, an alternative embodiment of a flow diagram illustrating the operation of the controller 210 (or a part of the RNC 138) with respect to determining and setting the pilot power in a relatively continuously variable manner is illustrated. In the embodiment illustrated in Figure 4, the process begins at block 400 with the load being determined in like manner to that described above in conjunction with Figure 3. Thereafter, in block 405 the load is then used in an algorithm to calculate a desired pilot power. In one embodiment of the instant invention, the algorithm may take the following form:

$$P_{Pilot} = c + \alpha \cdot \eta_{DL}, \text{ for } \eta_{DL,min} \le \eta_{DL} \le \eta_{DL,max}$$

where $\eta_{DL}$ is the average cell load and *c* and $\alpha$ are both constant values (design parameters).

Thereafter in block 410 the pilot power is filtered to allow more gradual changes, as discussed above in conjunction with Figure 3. The filtering may take any of a wide variety of forms without departing from the spirit and scope of the instant invention. In one embodiment, the filter may take the form of the following equation:

$$P_{CPICH,n} = (1 - f) \cdot P_{CPICH,n-1} + f \cdot P_{Pilot}$$

where *f* is the filter factor of the forgetting filter.

Those skilled in the art will appreciate that while control of the pilot power has been described in the context of the controller 210 (or a part of the RNC 138), some or all of the functions described in Figures 3 and 4 may be carried out within other portions of the communications system 100 without departing from the spirit and scope of the instant invention.

Those skilled in the art will appreciate that the various system layers, routines, or modules illustrated in the various embodiments herein may be executable control units (such as the controllers 210, 250 (see Figure 2)). The controllers 210, 250 may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital versatile disks (DVDs). Instructions that make up the various software layers, routines, or modules in the various systems may be stored in respective storage devices. The instructions when executed by the controllers 210, 250 cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

**Claims**

1.  A method for controlling pilot power in a communications system, comprising:

    determining a load associated with a cell in the communications system; and
    setting pilot power at a level associated with the determined load.

2.  A method, as set forth in claim 1, wherein setting pilot power at a level associated with the determined load further comprises setting pilot power at a first level in response to the determined load being less than a first preselected value and setting pilot power at a second level in response to the determined load being greater than the first preselected value.

3.  A method, as set forth in claim 2, further comprising filtering the pilot power to control the rate at which pilot power transitions between the first and second levels.

4.  A method, as set forth in claim 1, wherein setting pilot power at a level associated with the determined load further comprises setting pilot power as a linear function of the determined load.

5.  A method, as set forth in claim 4, further comprising filtering the pilot power.

6.  A method, as set forth in claim 1, wherein determining the load associated with a cell in the communications system further comprises determining the load based on the number of mobile stations associated with the cell.

7.  A method, as set forth in claim 1, wherein determining the load associated with a cell in the communications system further comprises determining the load based on a magnitude of information being exchanged in the cell.

8.  A method, as set forth in claim 1, wherein determining the load associated with a cell in the communications system further comprises determining the load based on actual transmitted power of the cell.

9.  A method, as set forth in claim 1, wherein determining the load associated with a cell in the communications system further comprises determining the load based on a ratio of actual transmitted power of the cell to a total maximum transmit power.

**FIGURE 1**

EP 1 603 357 A1

FIGURE 2

```
            ┌─────────────────────┐
            │    DETECT LOAD      │ ──── 300
            └─────────────────────┘
                      │
                      ▼
                    ╱───╲  305
                  ╱       ╲
                ╱  LOAD LESS ╲      NO
               ⟨   THAN        ⟩ ──────────────┐
                ╲  SETPOINT?  ╱                │
                  ╲         ╱                  │
                    ╲───╱                      │
                      │ YES                    │
                      ▼        310             ▼              315
            ┌─────────────────────┐    ┌─────────────────────┐
            │ PILOT POWER =       │    │ PILOT POWER =       │
            │ LOW VALUE           │    │ HIGH VALUE          │
            └─────────────────────┘    └─────────────────────┘
                      │                          │
                      ▼        320               │
  CURRENT PILOT ──▶ ┌─────────────────────┐      │
  POWER             │ FILTER PILOT POWER  │ ◀────┘
                    └─────────────────────┘
                              │
                              ▼
```

**FIGURE 3**

DETECT LOAD — 400

SET PILOT POWER AS A FUNCTION OF LOAD — 405

CURRENT PILOT POWER → FILTER PILOT POWER — 410

**FIGURE 4**

EP 1 603 357 A1

**European Patent Office**

## EUROPEAN SEARCH REPORT

Application Number

EP 05 25 2538

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 499 395 A (DOI ET AL) 12 March 1996 (1996-03-12) * abstract * * column 2, line 49 - column 3, line 42 * * column 5, line 25 - column 6, line 27 * * figures 2-4 * ----- | 1-9 | H04Q7/36 |
| X | US 5 898 682 A (KANAI ET AL) 27 April 1999 (1999-04-27) * the whole document * ----- | 1-9 | |

TECHNICAL FIELDS SEARCHED (Int.Cl.7)

H04Q

The present search report has been drawn up for all claims

| Place of search | Date of completion of the search | Examiner |
|---|---|---|
| The Hague | 17 June 2005 | Dejonghe, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 25 2538

This annex lists the patent family members relating to the patent documents cited in  the above-mentioned European search report.
The members are as contained  in the European Patent Office EDP file on
The European Patent Office is in no way liable for these particulars which are merely  given for the purpose of information.

17-06-2005

| Patent document cited in search report | | Publication date | Patent family member(s) | | Publication date |
|---|---|---|---|---|---|
| US 5499395 | A | 12-03-1996 | JP | 6263383 A | 20-09-1994 |
| US 5898682 | A | 27-04-1999 | JP | 2803716 B2 | 24-09-1998 |
| | | | JP | 9247085 A | 19-09-1997 |
| | | | AU | 721201 B2 | 29-06-2000 |
| | | | AU | 1518997 A | 18-09-1997 |
| | | | GB | 2350024 A ,B | 15-11-2000 |
| | | | GB | 2350026 A ,B | 15-11-2000 |
| | | | GB | 2311191 A ,B | 17-09-1997 |

EPO FORM P0459

For more details about this annex : see Official Journal of the European Patent Office, No. 12/82